# DEMANDE DE BREVET EUROPEEN

(11) **EP 4 451 029 A1**
(43) Date de publication de la demande: **23.10.2024**
(21) Numéro de dépôt: 24170744.7
(22) Date de dépôt: 17.04.2024
(51) Int. Cl.: G02B 6/44, H02G 3/32

(54) **PEIGNE DE MAINTIEN DE CÂBLES**

(30) Priorité: 17.04.2023 FR 2303846
(71) Demandeur: ACOME, 75014 Paris (FR)
(72) Inventeur: ANFRAY, Christophe, 50140 Mortain Bocage (FR); CHEVALIER, Pacôme, 35140 Méziéres sur Couesnon (FR)
(74) Mandataire: Regimbeau

(57) **Abrégé**

La présente invention concerne un peigne (1) pour câble(s) comprenant :
- un support (2) comprenant une base (21) rectangulaire et une rangée de logements (22), chaque logement (22) étant définit par des parois (20) espacées les unes des autres et faisant saillie depuis la base (21) selon une première direction (X-X), les parois (20) étant disposées (20) selon une deuxième direction (Y-Y) perpendiculaire à la première direction (X-X), chaque paroi (20) s'étendant depuis des côtés (24) de la base (21) selon la première direction (X-X), le support (2) étant dans un premier matériau,
- une structure (3) de maintien recouvrant chaque logement (22), la structure de maintien (3) étant dans un second matériau souple par rapport au premier matériau de manière à former des canaux (31) déformables selon les première (X-X) et deuxième directions (Y-Y), les canaux (31) étant configurés pour maintenir des câbles agencés dans les canaux selon une troisième direction (Z-Z) transversale à la première direction (XX) et à la deuxième direction (YY).

## Description

### DOMAINE TECHNIQUE

La présente demande concerne de manière générale le domaine des équipements et composants pour l'installation de câbles de préférence optiques dans des réseaux optiques, et plus généralement de tout élément allongé. En particulier, l'invention concerne le maintien de tels éléments par l'intermédiaire d'un peigne.

### ETAT DE LA TECHNIQUE

Lorsqu'il s'agit de déployer un réseau FTTH (en anglais, "Fiber To The Home") ou un réseau électrique, il est nécessaire de déployer un très grand nombre de câbles optiques ou électriques. Pour faciliter le déploiement de tels câbles vers un maximum d'utilisateur, des boitiers ou armoires de distribution sont utilisés à l'intérieur desquels les câbles sont raccordés et/ou connectés. Afin d'éviter d'endommager les câbles ou modules optiques de câbles (ci-après nommés « câbles ») à l'intérieur du boîtier ou de l'armoire, des peignes sont utilisés pour guider et maintenir les câbles dans le boitier ou l'armoire.

Il existe un besoin d'avoir des peignes pouvant maintenir et guider les câbles sans les endommager et qui peuvent s'adapter facilement à plusieurs dimensions de câbles.

### EXPOSE DE L'INVENTION

Un but de la présente demande est de proposer un peigne qui répond au besoin ci-dessus. A ce titre, l'invention concerne, selon un premier aspect, un peigne pour câble(s) comprenant :
- un support comprenant une base rectangulaire et une rangée de logements, chaque logement étant définit par des parois espacées les unes des autres et faisant saillie depuis la base selon une première direction, les parois étant disposées selon une deuxième direction perpendiculaire à la première direction, chaque paroi s'étendant depuis des côtés de la base selon la première direction, le support étant dans un premier matériau,
- une structure de maintien recouvrant chaque logement, la structure de maintien étant dans un second matériau souple par rapport au premier matériau de manière à former des canaux déformables selon les première et deuxième directions, les canaux étant configurés pour maintenir des câbles agencés dans les canaux selon une troisième direction transversale à la première direction et à la deuxième direction.

L'invention, selon le premier aspect, est avantageusement complétée par les caractéristiques suivantes, prises seules ou en une quelconque de leur combinaison techniquement possible :
- les parois comprennent deux parois d'extrémité positionnées aux deux côtés opposés de la base et une rangée de parois intermédiaires disposée entre les deux parois d'extrémité, la structure de maintien s'étendant selon la deuxième direction entre les parois d'extrémité et recouvrent complètement les parois intermédiaires ;
- la structure de maintien comprend des bossages faisant saillie depuis chaque paroi selon la deuxième direction à l'intérieur des logements ;
- chaque paroi intermédiaire comprend une rangée de bossages ;
- chaque bossage s'étend sur toute la hauteur de la paroi et optionnellement sur toute la largeur de la paroi ;
- chaque logement comporte deux rangées de bossage l'une en face de l'autre ;
- chaque paroi comprend une rangée de bossages selon la première direction ;
- le support est en l'un des matériaux choisis dans la liste suivante : Polycarbonate, Polycarbonate chargé, ABS, ABS/PC, Polypropylène chargé ou PET, vierges ou recyclés ;
- la structure de maintien est en l'un des matériaux choisi dans la liste suivante : SEBS, Silicone, Rubber, Polyuréthane, vierges ou recyclés ;

L'invention concerne, selon un deuxième aspect, un boitier comportant un emplacement et un peigne, selon le premier aspect de l'invention, disposé dans l'emplacement par l'intermédiaire de sa base, le peigne étant de préférence clipsé à l'emplacement par l'intermédiaire de formes complémentaires disposées sur le peigne et le logement.

Le boitier, selon le deuxième aspect, comprend avantageusement un couvercle fixé de manière mobile au logement, le couvercle étant configuré pour s'étendre au-dessus du peigne.

L'invention concerne, selon un troisième aspect, un kit comprenant un peigne selon le premier aspect de l'invention ou un boitier selon le deuxième aspect de l'invention et un outil d'insertion comprenant une poignée et une lame s'étendant depuis la poignée, la lame comportant une forme complémentaire à celle des canaux du peigne de manière à permettre l'introduction des câbles dans le peigne selon la première direction.

Grâce au peigne de l'invention le maintien des câbles est réalisé par :
- des formes aménagées dans les canaux du peigne ;
- des surfaces d'accrochage au contact des câbles (fort coefficient de frottement) ;
- un matériau souple d'accroche compatible avec les câbles ;
- une pression/serrage réalisée par la disposition des bossages.

En outre, les avantages sont les suivants :
- possibilité de recevoir une variété de diamètres de câbles différents dans un même peigne sans adaptation par l'installateur ;
- un canal du peigne peut recevoir simultanément une variété de diamètres de câbles ;
- il est possible d'avoir plusieurs niveaux de câbles sans limitation de nombre de niveaux ;
- bon maintien des câbles ;
- pas de détérioration des câbles ;
- mise en place et retrait des câbles sans perte de maintien ;
- pas de détérioration des canaux après multiple insertion/retrait.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 illustre un peigne selon un mode de réalisation de l'invention ;
La figure 2 illustre un support d'un peigne selon un mode de réalisation de l'invention ;

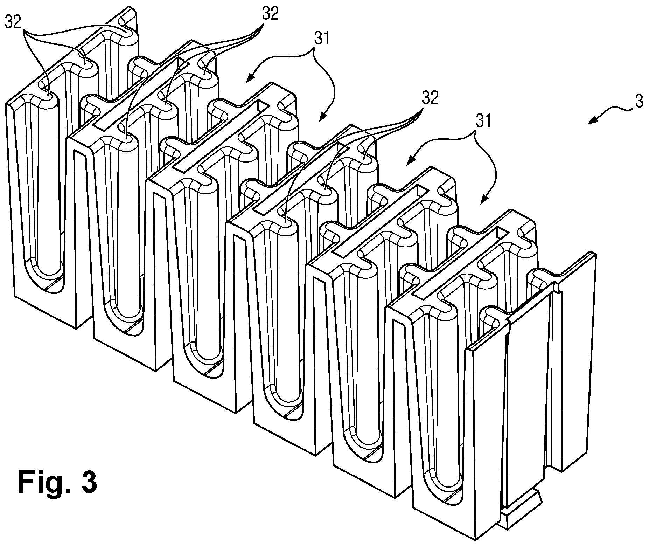

La figure 3 illustre une structure de maintien d'un peigne selon un mode de réalisation de l'invention ;
La figure 4 illustre un peigne avec des câbles insérés dans des canaux du peigne ;

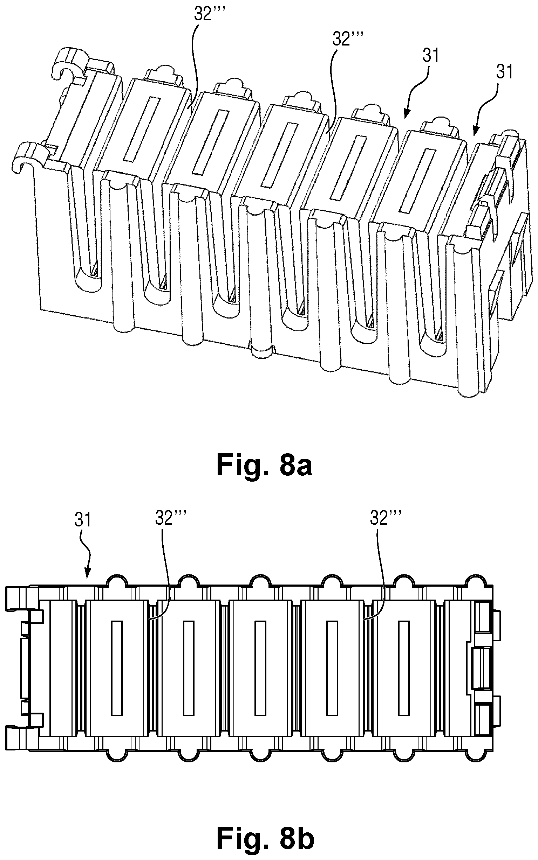

La figure 5a, la figure 5b, la figure 6a, la figure 6b, la figure 7a, la figure 7b, la figure 8a, la figure 8b illustrent des modes de réalisation de la structure de maintien du peigne selon l'invention ;
La figure 9a et la figure 9b illustrent le peigne de l'invention muni d'un couvercle ;
La figure 10a et la figure 10b illustrent un outil d'insertion de câbles dans le peigne de l'invention.

Sur l'ensemble des figures, les éléments similaires portent des références identiques.

### DESCRIPTION DETAILLEE DE L'INVENTION

Dans ce qui suit, on désigne indifféremment un câble optique par rapport à un câble électrique. En outre, un câble peut comprendre un ou plusieurs éléments optique(s) ou électrique(s). En d'autres termes, un câble désigne tout élément allongé.

### Peigne

Un peigne 1 pour câble(s) C ici décrit comprend un support 2 constitué d'une base 21 rectangulaire et d'une rangée de logements 22. Chaque logement 22 est défini par des parois 20 adjacentes et espacées les unes par rapport aux autres et qui font saillie depuis la base 21 selon une première direction X-X.

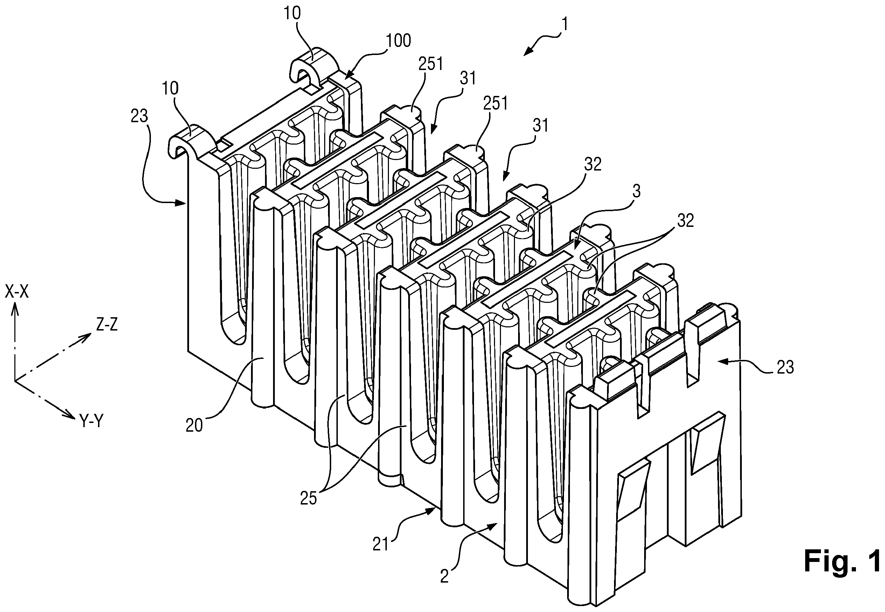

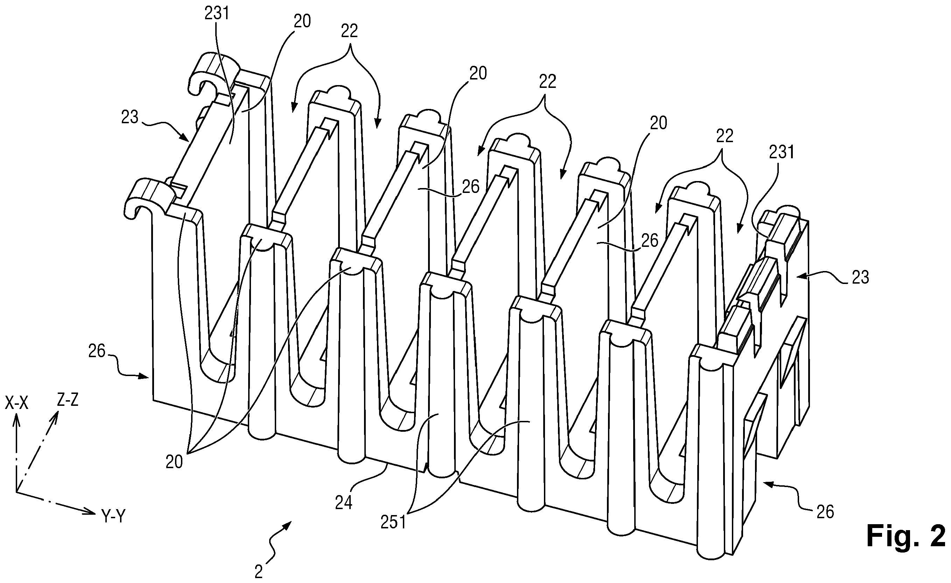

Sur les figures 1 et 2 la base 21 est rectangulaire et les grands côtés 24 sont selon une deuxième direction Y-Y perpendiculaire à la première direction X-X et les petits côtés 26 sont perpendiculaires aux grands côtés et sont selon une troisième direction Z-Z perpendiculaire à la première direction X-X et à la deuxième direction Y-Y.

Les parois 20 s'étendent selon la deuxième direction Z-Z entre des côtés 24 de la base 21.

Les parois 20 comprennent deux parois d'extrémités 23 positionnés aux deux côtés opposés 26 de la base 21 et une rangée de parois intermédiaires 25 disposée entre les deux parois d'extrémités 23. Chaque paroi intermédiaire 25 s'étend avantageusement entre deux murs 251 qui s'élèvent selon la première direction X-X depuis des côtés 24 opposés à la base 21.

La base 21, les parois d'extrémités 23 et les murs 251 délimitent une partie intérieure du peigne 1.

Une structure 3 de maintien s'étend selon la deuxième direction Y-Y entre les deux parois d'extrémités 23 et recouvre chaque logement 22. En particulier, cette structure de maintien 3 s'étend sur toute la partie intérieure du peigne entre les faces internes 231 des parois d'extrémités 23 en recouvrant les parois intermédiaires 25.

La structure 3 de maintien permet de définir des canaux 31 de maintien dans les logements 22.

De manière avantageuse le support 2 est dans un premier matériau et la structure de maintien 3 est dans un deuxième matériau plus souple que le premier matériau qui lui est rigide.

Le support 2 est de préférence en l'un des matériaux choisis dans la liste suivante : Polycarbonate, Polycarbonate chargé, ABS, ABS/PC, Polypropylène chargé, vierges ou recyclés

La structure de maintien 3 est de préférence en l'un des matériaux choisis dans la liste suivante : SEBS, Silicone, Rubber, Polyuréthane, vierges ou recyclés. En outre, la structure de maintien 3 présente une dureté comprise entre 5 et 70 Shore A avec une plage de déformation rémanente à la compression (notée DRC) comprise entre 15 et 45% mesurée selon le standard ASTM D395.

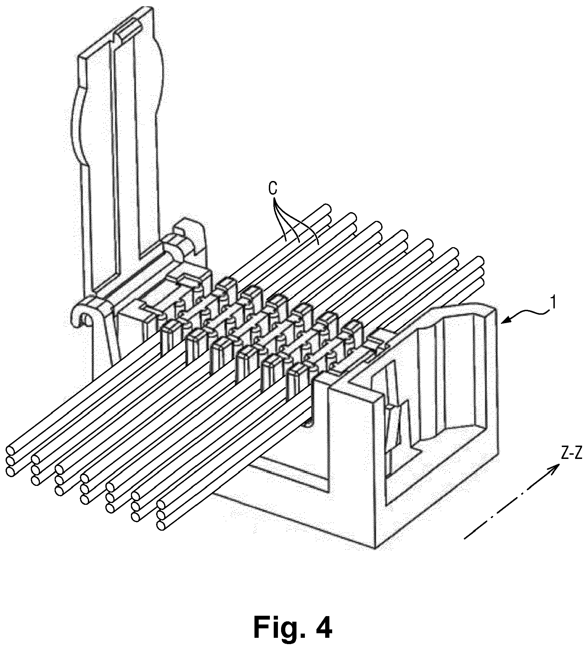

L'idée est que le support 2 confère une rigidité au peigne 1 tandis que la structure de maintien 3 permet de définir des canaux 31 déformables pour maintenir des câbles C agencés dans les canaux selon la troisième direction Z-Z comme cela est visible sur la figure 4. Compte tenu du caractère déformable de la structure de maintien 3 par rapport au support 2, les câbles insérés en force sont maintenus. En effet, entre chaque paroi 20 rigide par rapport à la structure de maintien 3 celle-ci se déforme élastiquement lorsqu'un câble est inséré selon la première direction X-X dans chaque canal 31. De cette manière, chaque canal 31 épouse chaque câble sans l'endommager.

La structure maintien 3 et le support 2 sont de préférence formés d'une seule pièce et sont avantageusement moulés conjointement en utilisant deux matériaux différents.

Pour faciliter à la fois l'insertion des câbles dans les canaux 31 et pour les maintenir, la structure de maintien 3 n'est pas nécessairement lisse au niveau des parois 20 mais présente des profils divers.

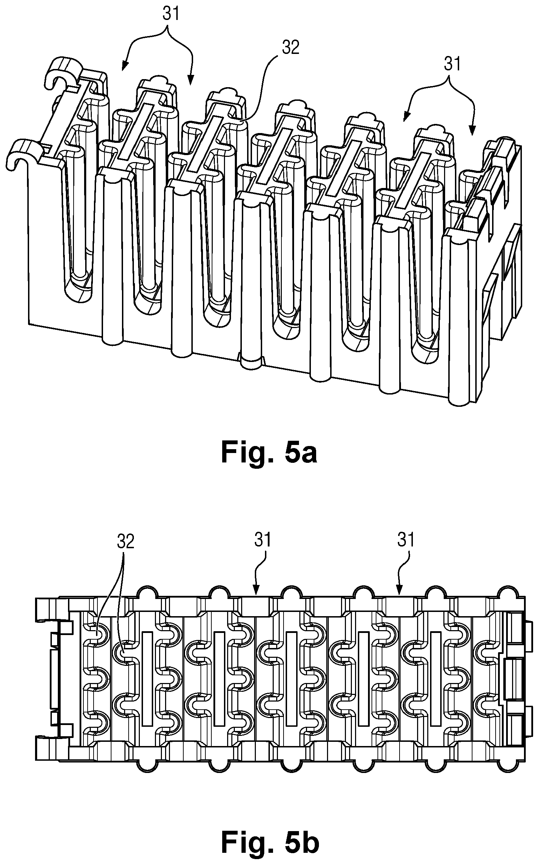

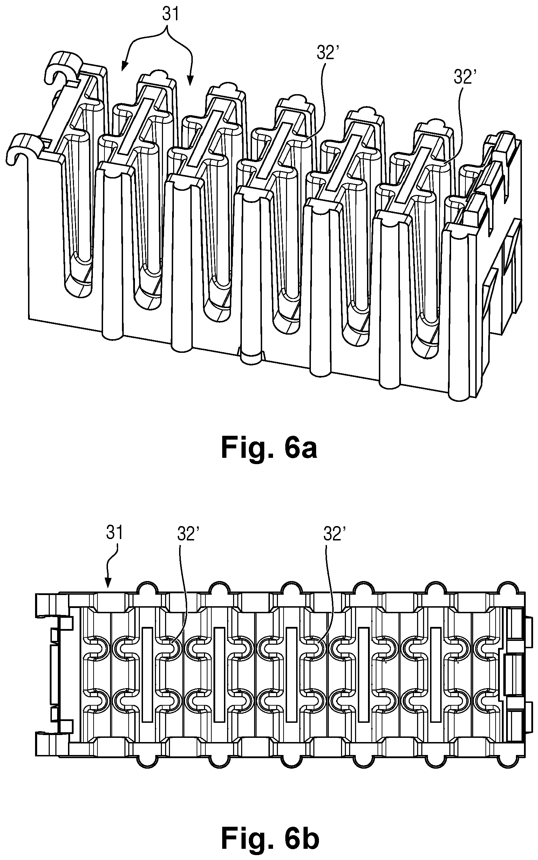

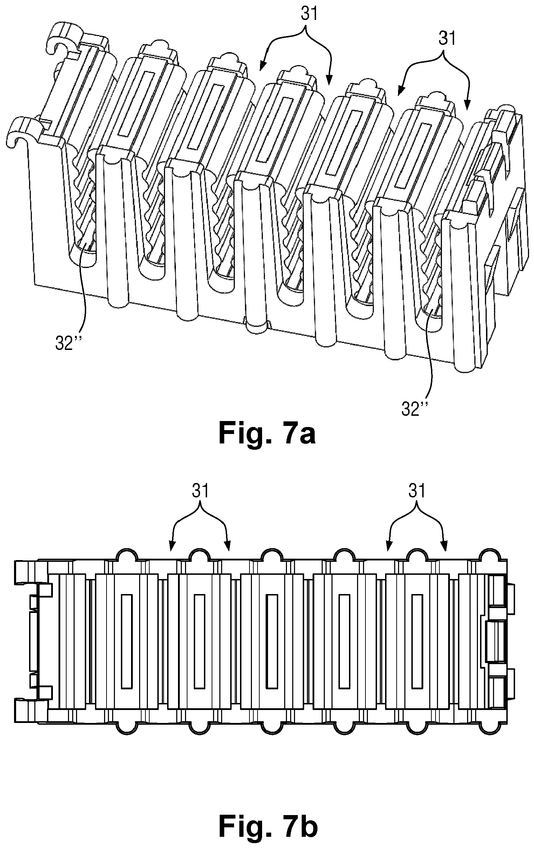

Selon un mode de réalisation (figure 5a, figure 6b, figure 7a), la structure de maintien 3 comprend des bossages 32, 32', 32" faisant saillie depuis chaque paroi 20 selon la deuxième direction Y-Y. De préférence, chaque paroi 20 comprend une rangée de bossages 32, 32', 32". Les bossages s'étendent soit sur la largeur (direction Z-Z, figure 7a, figure 7b) soit sur la hauteur de la paroi (direction X-X, figure 1). Les bossages 32, 32', 32" sont notamment en forme de boudin mais peuvent bien entendu prendre d'autres formes.

De tels bossages 32, 32', 32" sont tels que chaque logement 20 comporte deux rangées de bossage 32, 32', 32" l'une en face de l'autre. Selon les cas, les rangées sont telles que les bossages sont en décalé ou en face de l'autre. Chaque paroi 20 comprend par exemple trois bossages en face en face ou une paroi comprend trois bossages tandis que la paroi en face en comprend deux.

Selon un mode de réalisation, la structure de maintien 3 comprend un bossage qui occupe la quasi-totalité de la largeur des parois de chaque canal 31 (figure 7a, figure 7b). Il s'agit dans ce cas d'un rectangle.

Selon un mode de réalisation, les bossages peuvent être une combinaison de chacun des bossages ci-dessus décrit.

### Boitier

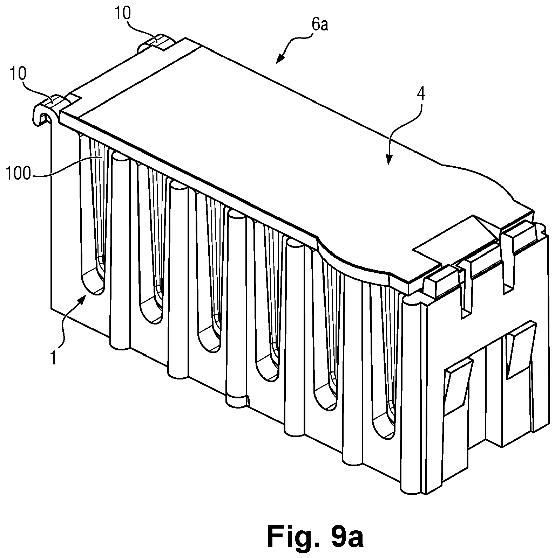

Selon un mode de réalisation illustré à la figure 9a, le peigne 1 ci-dessus décrit peut en outre comprendre un couvercle 4 qui recouvre la partie 100 supérieure du peigne 1 et ainsi empêche les câbles de sortir du peigne 1 lorsque celui-ci est manipulé. Le couvercle 4 est monté mobile au support 2 par l'intermédiaire de crochets 10 fixés ou en saillie du support 2.

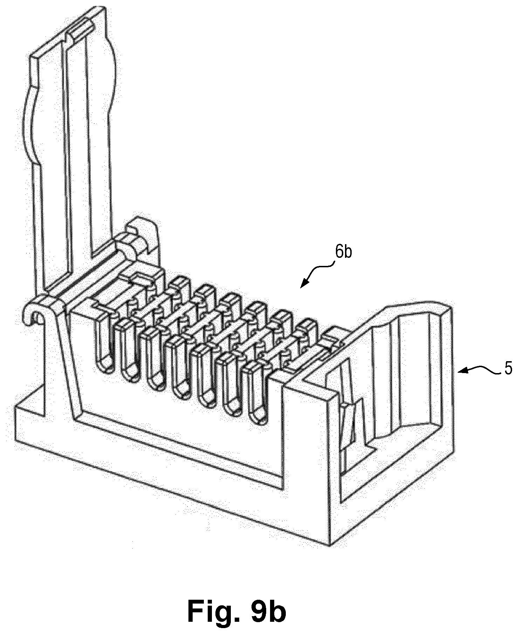

Selon un mode de réalisation illustré à la figure 9b, le peigne 1 s'insère dans une embase 5 qui peut comprendre elle-même les crochets 10 de fixation du couvercle 4. L'embase 5 et le support 2 comprennent des moyens complémentaires permettant de clipser le support 2 (et donc le peigne 1) à l'embase 5. Bien entendu, on peut envisager tout type de moyens de fixation du peigne à l'embase 5.

Le peigne 1 et le couvercle 4 avec ou sans l'embase 5 forment ainsi un boitier 6a, 6b.

### Outil

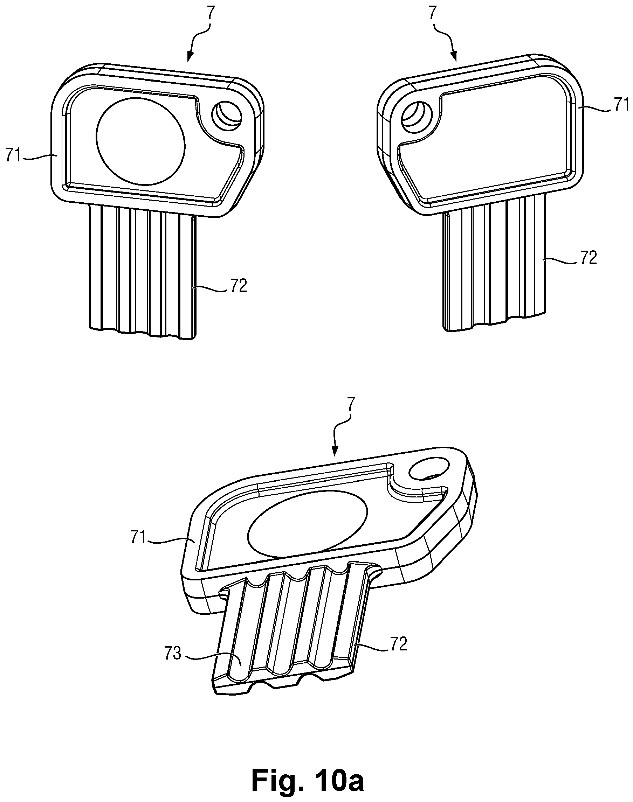

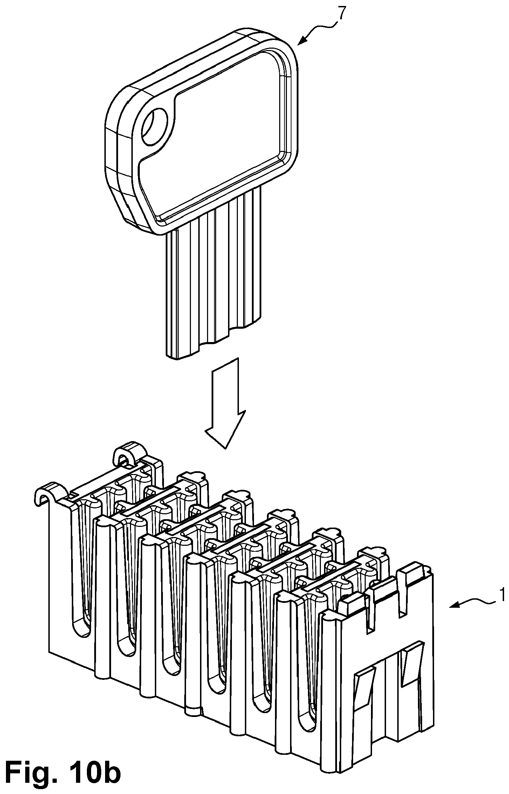

Comme déjà expliqué, les câbles C s'insèrent en force dans les canaux 31. Une telle insertion peut se faire manuellement mais il est avantageux d'utiliser un outil 7 d'insertion comme illustré sur la figure 10a. Un tel outil 7 comporte une poignée 71 par exemple rectangulaire à laquelle est fixée une lame 72 comprenant des profils 73 complémentaires aux profils des canaux. Si les canaux 31 comprennent des rangées de bossages alors la lame présente une forme complémentaire. L'idée est que la lame épouse parfaitement les canaux 31 pour pousser les câbles C à l'intérieur (voir la figure 10b) selon la première direction X-X.

En outre, la lame 72 est dans un matériau qui n'endommage ni les canaux du peigne ni les câbles lors de leur insertion dans les canaux.

## Revendications

1. Peigne (1) pour câble(s) comprenant :
- un support (2) comprenant une base (21) rectangulaire et une rangée de logements (22), chaque logement (22) étant définit par des parois (20) espacées les unes des autres et faisant saillie depuis la base (21) selon une première direction (X-X), les parois (20) étant disposées (20) selon une deuxième direction (Y-Y) perpendiculaire à la première direction (X-X), chaque paroi (20) s'étendant depuis des côtés (24) de la base (21) selon la première direction (X-X), le support (2) étant dans un premier matériau, las parois (20) comprenant deux parois d'extrémité (23) positionnées aux deux côtés opposés de la base (21) et une rangée de parois intermédiaire (25) disposées entre les deux parois d'extrémités (23), chaque paroi intermédiaire s'étendant entre deux murs (251) s'élevant selon la première direction (X-X) depuis les côtés (24) opposés à la base (21), la base (21), les parois d'extrémités (23) et les murs (251) délimitant une partie intérieure du peigne (1).
- une structure (3) de maintien recouvrant chaque logement (22), la structure de maintien (3) étant dans un second matériau souple par rapport au premier matériau, la structure de maintien (3) s'étendant sur toute la partie intérieure du peigne entre les faces internes (231) des parois d'extrémités (23) en recouvrant les parois intermédiaires 25, la structure de maintien (3) formant ainsi des canaux (31) déformables selon les première (X-X) et deuxième directions (Y-Y), les canaux (31) étant configurés pour maintenir des câbles (C) agencés dans les canaux selon une troisième direction (Z-Z) transversale à la première direction (XX) et à la deuxième direction (YY), la structure (3) de maintien comprenant des bossages (32, 32', 32", 32‴) faisant saillie depuis chaque paroi (20) selon la deuxième direction (Y-Y) à l'intérieur des logements (22).

2. Peigne selon la revendication 1, dans lequel la structure de maintien (2) et le support (2) sont formés d'une seule pièce.

3. Peigne selon l'une des revendications 1 à 2, dans lequel chaque paroi (26) intermédiaire comprend une rangée de bossages (32, 32', 32", 32'").

4. Peigne selon la revendication 3, dans lequel chaque bossage (32, 32') s'étend sur toute la hauteur de la paroi et optionnellement sur toute la largeur de la paroi.

5. Peigne selon l'une des revendications 1 à 4, dans lequel chaque logement comporte deux rangées de bossage (32, 32', 32'") l'une en face de l'autre.

6. Peigne selon la revendication 1, dans lequel chaque paroi comprend une rangée de bossages (32, 32', 32"') selon la première direction (X-X).

7. Peigne selon l'une des revendications 1 à 6, dans lequel le support (1) est en l'un des matériaux choisis dans la liste suivante : Polycarbonate, Polycarbonate chargé, ABS, ABS/PC, Polypropylène chargé ou PET, vierges ou recyclés

8. Peigne selon l'une des revendications 1 à 7, dans lequel la structure de maintien (3) est en l'un des matériaux choisi dans la liste suivante : SEBS, Silicone, Rubber, Polyuréthane, vierges ou recyclés

9. Boitier comportant un emplacement et un peigne (1) selon l'une des revendications 1 à 8 disposé dans l'emplacement par l'intermédiaire de sa base, le peigne (1) étant de préférence clipsé à l'emplacement par l'intermédiaire de formes complémentaires disposées sur le peigne et le logement.

10. Boitier selon la revendication 9, comportant un couvercle (4) fixé de manière mobile au logement, le couvercle étant configuré pour s'étendre au-dessus du peigne (1).

11. Kit comprenant un peigne (1) selon l'une des revendication 1 à 8 ou un boitier selon l'une des revendications 9 à 10 et un outil (7) d'insertion comprenant une poignée (71) et une lame (72) s'étendant depuis la poignée, la lame comportant une forme complémentaire à celle des canaux du peigne de manière à permettre l'introduction des câbles dans le peigne selon la première direction (X-X).
